(19) Europäisches Patentamt
European Patent Office
Office européen des brevets

(11) **EP 2 624 216 A2**

(12) **EUROPÄISCHE PATENTANMELDUNG**

(43) Veröffentlichungstag:
**07.08.2013 Patentblatt 2013/32**

(51) Int Cl.:
***G06T 15/60*** *(2006.01)*

(21) Anmeldenummer: **13000535.8**

(22) Anmeldetag: **01.02.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **06.02.2012   DE 102012002111
06.09.2012   DE 102012017829**

(71) Anmelder: **MBDA Deutschland GmbH
86529 Schrobenhausen (DE)**

(72) Erfinder:
• **Klein, Andreas
83646 Bad Tölz (DE)**
• **Nischwitz, Alfred
82194 Gröbenzell (DE)**
• **Obermeier, Paul
81375 München (DE)**
• **Schätz, Peter
83059 Kolbermoor (DE)**

(74) Vertreter: **Häußler, Henrik
EADS Deutschland GmbH
Patentabteilung
81663 München (DE)**

(54) **Berechnen thermischer Schatten**

(57)     Ein Verfahren zum Erzeugen einer Ansicht einer Szene (50) mit thermischen Schatten (74) umfasst die folgenden Schritte:

Berechnen einer Mehrzahl von Schattentexturen (60) für eine dreidimensionale Szene (50) für eine Mehrzahl von Iterationsschritten basierend auf einer Position wenigstens einer thermischen Quelle (54), wobei die dreidimensionale Szene (50) eine Mehrzahl von Objekten (52) umfasst, die jeweils durch eine dreidimensionale Beschreibung einer Objektoberfläche, und/oder eines Objektvolumens definiert sind;

Berechnen eines Schattenfaktors (66) für ein Pixel (64) der zweidimensionalen Ansicht (62) für einen Iterationsschritt basierend auf der Schattentextur (60) des Iterationsschritts, wobei der Schattenfaktor (66) einen Grad der Beschattung an der Stelle des Pixels angibt;

Berechnen einer Gleichgewichtstemperatur (68) für das Pixel (64) für den Iterationsschritt basierend auf dem Schattenfaktor (66) zu dem Iterationsschritt;

Berechnen einer Temperaturanpassung (70) für das Pixel (64) für den Iterationsschritt basierend auf einer Temperaturanpassung aus einem vorhergehenden Iterationsschritt;

Berechnen einer Oberflächentemperatur (72) für den Iterationsschritt für das Pixel (64) basierend auf einer Summe der Gleichgewichtstemperatur (68) und der Temperaturanpassung (70);

Erzeugen einer thermischen zweidimensionalen Ansicht (62) der Szene (50) aus den Oberflächentemperaturen des letzten Iterationsschritts.

Fig. 4

**Beschreibung**

GEBIET DER ERFINDUNG

Die Erfindung betrifft ein Verfahren, ein Computerprogramm und ein computerlesbares Medium zum Erzeugen einer Ansicht einer Szene mit thermischen Schatten, sowie ein Verfahren zum Testen eines technischen Geräts und ein Testsystem zum Testen eines technischen Geräts.

HINTERGRUND DER ERFINDUNG

Simulationen, in denen Infrarotbilder erzeugt werden, werden seit mehreren Jahrzehnten zum Testen von realen und virtuellen Infrarotsuchvorrichtungen eingesetzt. Um einen breiten Bereich von klimatischen und atmosphärischen Gegebenheiten abdecken zu können, werden diese Simulationen als synthetische Umgebungen verwendet. Infrarote dynamische Szenen bzw. Infrarotbilder mit geeigneten Bildfrequenzen werden dabei beispielsweise zum Modellieren von Signalen für Such- und Sichtvorrichtungen benötigt, um eine kontrollierte Bewegung in einem virtuellen Szenario zu erzeugen. Dafür sind Infrarotvideos meistens nicht geeignet.
Im Infrarotspektrum existieren zwei Beiträge zu Schatten: Ein Teil umfasst reflektive Schatten, die durch Verdeckung von direkt reflektierten Infrarotstrahlen entstehen. Der andere Teil umfasst thermische Schatten, die durch Verdeckung vor Strahlung in der Vergangenheit auftreten. Die Vorhersage von thermischen Schatten benötigt eine Berechnung der thermischen Bilanz in vier Dimensionen (d. h. einer dreidimensionalen Geometrie und der eindimensionalen Zeit), die rechentechnisch aufwendig ist und daher meistens nur in Nicht-EchtzeitSimulationen eingesetzt werden kann.
Zum Erzeugen von Infrarotbildern ist es beispielsweise bekannt, thermische Schatten nachträglich in die Geometrie einer Szene, beispielsweise über zusätzliche Polygone, einzufügen. Hier besteht der Nachteil, dass die Geometrie der Szene angepasst werden muss. Diese Technik ist damit nur beschränkt für den Einsatz in Simulationen mit dynamischer Geometrie geeignet, da sich auch bei dem Bewegen von Objekten in der Szene die Polygone für den thermischen Schatten verschieben müssen.
Weiter ist es möglich, Infrarotbilder beispielsweise durch Raytracing oder Finite-Elemente-Berechnungen zu erzeugen. Diese Berechnungen sind in der Regel nicht echtzeitfähig, wodurch ein Einsatz in Echtzeitsimulationen nicht oder nur eingeschränkt möglich ist. Für die Darstellung eines Infrarotfilms, d.h. einer dynamischen infraroten Szene, in Echtzeit müssen diese Berechnungen in einem Vorverarbeitungsschritt durchgeführt werden, wodurch eine Veränderung der Geometrie während der Simulation in der Regel nicht möglich ist.

ZUSAMMENFASSUNG DER ERFINDUNG

Es ist Aufgabe der Erfindung, das Simulieren dynamischer infraroter Szenen zu erleichtern.
Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.
Ein Aspekt der Erfindung betrifft ein Verfahren zum Erzeugen einer Ansicht einer Szene mit thermischen Schatten. Die zweidimensionale Ansicht wird in der Regel aus einem dreidimensionalen Modell, das in einem Computer gespeichert ist, erzeugt, wobei die dreidimensionale Szene eine Mehrzahl von Objekten umfasst, die jeweils durch eine dreidimensionale Beschreibung einer Objektoberfläche (beispielsweise in der Form eines Polygonnetzes), und/oder eines Objektvolumens (beispielsweise in Form eines Voxelgitters) definiert sind. Beispielsweise kann das dreidimensionale Modell ein sogenannter Szenegraph sein.
Gemäß einer Ausführungsform der Erfindung umfasst das Verfahren die folgenden Schritte: Berechnen einer Mehrzahl von Schattentexturen für eine dreidimensionale Szene für eine Mehrzahl von Iterationsschritten basierend auf einer Position wenigstens einer thermischen Quelle, wobei jede Schattentextur ein Iterationsschritt und somit einem Iterationszeitpunkt zugeordnet sein kann; Berechnen eines Schattenfaktors für ein Pixel der zweidimensionalen Ansicht für einen Iterationsschritt basierend auf der Schattentextur des Iterationsschritts, wobei der Schattenfaktor einen Grad der Beschattung an der Stelle des Pixels angibt; Berechnen einer Gleichgewichtstemperatur für das Pixel für den Iterationsschritt basierend auf dem Schattenfaktor zu dem Iterationsschritt; Berechnen einer Temperaturanpassung für das Pixel für den Iterationsschritt basierend auf einer Temperaturanpassung aus einem vorhergehenden Iterationsschritt; Berechnen einer Oberflächentemperatur für den Iterationsschritt für das Pixel basierend auf einer Summe der Gleichgewichtstemperatur und der Temperaturanpassung; Erzeugen einer thermischen zweidimensionalen Ansicht der Szene aus den Oberflächentemperaturen des letzten Iterationsschritts. Die zweidimensionale Ansicht kann dann auf einer Infrarotanzeige, beispielsweise einem Infrarotprojektor, dargestellt werden kann.
Der Schattenfaktor kann als Stärke des Schattens an der Position des Pixels aufgefasst werden. Ein Schattenfaktor von 0 kann dabei vollständige Beschattung und ein Schattenfaktor von 1 vollständige Bestrahlung durch die thermische Quelle bedeuten.

Die Gleichgewichtstemperatur wird in der Regel die Temperatur sein, die die Oberfläche an der Stelle des Pixels annehmen würde, wenn sie kontinuierlich und gleichmäßig bestrahlt werden würde (ohne Veränderung der Position und der Stärke der thermischen Quelle sowie des Schattenfaktors).

Die aktuelle Temperaturanpassung trägt dem Umstand Rechnung, dass thermische Schatten nicht nur durch Reflexion, sondern beispielsweise auch durch die Wärmespeicherungsfähigkeit der Oberfläche an der Stelle des Pixels und des darunterliegenden Materials beeinflusst werden. Die Temperaturanpassung beruht daher im Allgemeinen auf Werten aus der Vergangenheit, d.h. vorhergehenden Temperaturanpassungen, die zu vorherigen Iterationsschritten berechnet wurden.

Die Oberflächentemperatur an der Stelle des Pixels kann dann mit Hilfe einer Approximationsfunktion aus der Gleichgewichtstemperatur und der aktuellen Temperaturanpassung berechnet werden.

Die Berechnung der Oberflächentemperatur eines Pixels der zweidimensionalen Ansicht aus der Schattentextur kann dabei pixelweise erfolgen, ohne dass die Temperatur anderer Pixel der zweidimensionalen Ansicht in die Berechnung einfließen muss. Daher kann die Berechnung stark parallelisiert werden und in Echtzeit durchgeführt werden.

Gemäß einer Ausführungsform der Erfindung umfasst das Verfahren weiter den Schritt von: Wiederholtes Berechnen der thermischen zweidimensionalen Ansicht der Szene für weitere Simulationszeitschritte, so dass eine dynamische Szene erzeugt wird. Eine dynamische Szene kann dabei eine Abfolge mehrere einzelner (statischer) Einzelbilder bzw. Einzelszenen sein. Insgesamt kann das Verfahren zwei geschachtelte Schleifen umfassen: eine Simulationsschleife, die die dynamische Szene in Simulationszeitschritten erzeugt und eine Iterationsschleife, in der die zweidimensionale Ansicht (d.h. ein Einzelbild) in Iterationsschritten erzeugt wird. Damit können das Simulationsintervall (d.h. der Zeitraum zwischen zwei benachbarten Simulationszeitschritten) und die nähere Vergangenheit für die Simulation zeitdiskretisiert werden.

Gemäß einer Ausführungsform der Erfindung basiert die aktuelle Temperaturanpassung auf Multiplizieren der vorhergehenden Temperaturanpassung mit einem zeitabhängigen Faktor. Insbesondere kann der zeitabhängige Faktor die Näherung einer Exponentialfunktion sein, wie es etwa in den Formeln (2) und (3) weiter unten der Fall ist. Allgemeiner kann der zeitabhängige Faktor die Näherung einer Funktion ist, die den tatsächlichen Verlauf der Temperaturänderung approximiert.

Gemäß einer Ausführungsform der Erfindung basiert die aktuelle Temperaturanpassung zusätzlich auf einer Änderung der Gleichgewichtstemperatur, wie es etwa in den Formeln (2) und (3) weiter unten der Fall ist.

Gemäß einer Ausführungsform der Erfindung ist die aktuelle Temperaturanpassung aus der Summe einer ersten Temperaturanpassung und weiteren Temperaturanpassungen gebildet, wobei die erste Temperaturanpassung und die weiteren Temperaturanpassungen auf Näherungen für zeitabhängige Funktionen beruhen, die den tatsächlichen Verlauf der Temperaturänderung approximieren. Beispielsweise ist die aktuelle Temperaturanpassung aus der Summe einer ersten Temperaturanpassung und einer zweiten Temperaturanpassung gebildet, wie es etwa weiter unten in der Formel (4) der Fall ist, wobei die erste Temperaturanpassung und die zweite Temperaturanpassung auf Näherungen für zeitabhängige Exponentialfunktionen beruhen, die unterschiedliche Zeitkonstanten aufweisen. Das Temperaturverhalten der Oberfläche kann durch die Kombination von zwei Exponentialfunktionen, die die kurz- und langzeitige Temperaturveränderung beschreiben, angenähert werden. Durch die Kombination von zwei Exponentialfunktionen kann das Berechnen der Oberflächentemperatur genauer sein, als es bei Approximationen mit lediglich einer Exponentialfunktion der Fall wäre.

Gemäß einer Ausführungsform der Erfindung wird das Berechnen der Schattentextur und/oder des Schattenfaktors auf einer Parallelrechnerarchitektur, beispielsweise einer Grafikkarte, mit einem auf die Parallelrechnerarchitektur geladenen oder vorimplementierten Algorithmus, wie etwa "Percentage Closer Soft Shadows" (PCSS), ausgeführt. Durch den Einsatz derartiger Schattenalgorithmen, die bereits in dafür optimierten Grafikkarten vorhanden sind, können die Schatteninformationen in Echtzeit berechnet werden.

Gemäß einer Ausführungsform der Erfindung werden das Berechnen der Gleichgewichtstemperatur, der aktuellen Temperaturanpassung und/oder der Oberflächentemperatur auf einer Parallelrechnerarchitektur ausgeführt. Das Berechnen dieser Schritte kann mit einem Programm ausgeführt werden, das vom Prozessor einer Grafikkarte (der in der Regel eine Vielzahl von Prozessorkernen umfasst) parallel ausgeführt werden kann. Das Programm kann ein Shader-Programm für die Pixel-Shader der Grafikkarte sein. Der Algorithmus zur Approximation von thermischen Schatten kann auf Computergrafikkarten ausgeführt werden, die eine solche Programmierung zulassen.

Gemäß einer Ausführungsform der Erfindung wird die Gleichgewichtstemperatur bzw. Äquilibriumstemperatur basierend auf einer Bestrahlungstemperatur und einer Schattentemperatur mit Hilfe des Schattenfaktors berechnet. Diese Berechnung kann durch eine Interpolation zwischen Bestrahlungs- und Schattentemperatur der Oberfläche an der Stelle des Pixels erfolgen.

Die Bestrahlungstemperatur kann dabei eine Temperatur der Oberfläche sein, bei der der Punkt der Oberfläche der Quelle für die thermische Strahlung komplett ausgesetzt ist. Ist die Quelle die Sonne, kann auch von einer Bestrahlungstemperatur gesprochen werden. Bei der Schattentemperatur kann der betreffende Punkt der Oberfläche komplett beschattet sein.

Gemäß einer Ausführungsform der Erfindung wird die Gleichgewichtstemperatur durch (beispielsweise lineare) Interpolation aus der Bestrahlungstemperatur und der Schattentemperatur berechnet (siehe Formel (1) weiter unten). Bei einem Schattenfaktor von 0,5 kann beispielsweise der Mittelwert aus Bestrahlungstemperatur und Schattentemperatur genommen werden.

Gemäß einer Ausführungsform der Erfindung werden die Bestrahlungstemperatur und die Schattentemperatur in Abhängigkeit eines Materialtyps und/oder eines Materialzustands (beispielsweise trocken oder feucht) einer Oberfläche an der Stelle des Pixels gewählt. Gleichzeitig mit den Polygonzügen bzw. Meshes der Objekte in der dreidimensionalen Szene kann für die Objekte oder für bestimmte Teile der Oberfläche ein Materialtyp und/oder ein Materialzustand gespeichert werden, der eine Beziehung zu einer bestimmten, beispielsweise vorberechneten Bestrahlungs- und Schattentemperatur herstellt.

Gemäß einer Ausführungsform der Erfindung umfasst das Verfahren weiter den Schritt von: Verändern der dreidimensionalen Szene zwischen zwei Zeitschritten. Beispielsweise können der Gang der Sonne mit fortschreitender Zeit oder bewegte Objekte wie Fahrzeuge simuliert werden, deren Bewegung eine Änderung der Quelle der thermischen Strahlung und der überdeckten Oberflächen bewirkt. Insgesamt ist eine Berechnung von thermischen Schatten unter Echtzeitbedingungen möglich, ohne dass Einschränkungen bezüglich dynamischer Geometrie in einer Szene erforderlich sind.

Ein weiterer Aspekt der Erfindung betrifft ein Computerprogramm, das, wenn es auf wenigstens einem Prozessor ausgeführt wird, den Prozessor dazu anleitet, die Schritte des Verfahrens nach einem der vorhergehenden Ansprüche durchzuführen. Beispielsweise kann das Programm von einer CPU (einem Hauptprozessor eines Rechners) und einer GPU (einem Prozessor einer Grafikkarte) ausgeführt werden.

Ein weiterer Aspekt der Erfindung betrifft ein computerlesbares Medium, auf dem ein derartiges Computerprogramm gespeichert ist. Ein computerlesbares Medium kann dabei eine Diskette, eine Harddisk, ein USB-Speichergerät, ein RAM, ein ROM, ein EPROM sein. Ein computerlesbares Medium kann auch ein Datenkommunikationsnetzwerk, wie beispielsweise das Internet, das den Download eines Programmcodes ermöglicht, sein.

Ein weiterer Aspekt der Erfindung betrifft ein Verfahren zum Testen eines technischen Geräts. Das technische Gerät kann eine visuelle Anzeige, eine Infrarotanzeige oder eine Suchvorrichtung umfassen. Eine Suchvorrichtung kann beispielsweise eine Infrarotkamera und eine Steuerung umfassen, die in einem Flugkörper verbaut werden sollen.

Gemäß einer Ausführungsform der Erfindung umfasst das Verfahren die Schritte von: Erzeugen einer Ansicht einer Szene mit thermischen Schatten mit dem Verfahren nach einem der Ansprüche 1 bis 12; und Übertragen der Daten der zweidimensionalen Ansicht der Szene an das technische Gerät. Die Daten können an eine visuelle Anzeige, eine Infrarotanzeige oder eine Suchvorrichtung, beispielsweise eine Bildverarbeitungskomponente der Suchvorrichtung übertragen werden. Die zweidimensionalen Ansicht der Szene kann dann auf einer Anzeige (visuell oder Infrarot) angezeigt und/oder in der Suchvorrichtung weiterverarbeitet werden.

Gemäß einer Ausführungsform der Erfindung umfasst das Verfahren die Schritte von: Erfassen der zweidimensionalen Ansicht der Szene mit einem Detektor des technischen Geräts oder durch einen Menschen. Eine auf einer Anzeige dargestellte zweidimensionale Ansicht kann mit einem Detektor, beispielsweise einem Infrarotdetektor der Suchvorrichtung, erfasst und weiterverarbeitet werden. Auch ist es möglich, dass die zweidimensionale Ansicht von einem Menschen, beispielsweise bei einer Man-in-the-Loop-Simulation, betrachtet wird, der dann weitere Komponenten des technischen Geräts bedienen kann.

Beispielsweise kann Hardware einer Suchvorrichtung, d.h. der Infrarotdetektor und die angeschlossene elektronische Steuerung mittels der dynamisch erzeugten Szene getestet werden, indem die zweidimensionale Ansicht der Szene mittels eines Projektors dem Infrarotdetektor der Suchvorrichtung präsentiert wird.

Gemäß einer Ausführungsform der Erfindung umfasst das Verfahren weiter die Schritte von: Erzeugen von Steuerdaten basierend auf der erfassten Szeneabfolge in einer Steuerung der Suchvorrichtung; Ableiten von Bewegungsdaten aus den Steuerdaten; und Ändern der dynamischen Szene basierend auf den Bewegungsdaten. Beispielsweise kann durch eine simulierte Bewegung eines Flugkörpers, der die Suchvorrichtung tragen soll, eine Bewegung des Betrachters in der dreidimensionalen Szene gesteuert werden. So kann Hardware des Flugkörpers und insbesondere die Suchvorrichtung in einer Regelschleife getestet werden, die ein Simulationssystem zum Erzeugen der infraroten dynamischen Szene, die Infrarotanzeige und die Suchvorrichtung umfasst.

Ein weiterer Aspekt der Erfindung betrifft ein Testsystem zum Testen eines technischen Geräts, das Testsystem umfassend: ein Simulationssystem, das dazu ausgeführt ist, ein Verfahren so wie es obenstehend und untenstehend beschrieben ist auszuführen; eine Infrarotanzeige; und eine Schnittstelle zum Empfangen von Steuerdaten der Suchvorrichtung.

Im Folgenden werden Ausführungsbeispiele der Erfindung mit Bezug auf die beiliegenden Figuren detailliert beschrieben.

KURZE BESCHREIBUNG DER FIGUREN

Fig. 1 zeigt eine schematische Ansicht eines Testsystems gemäß einer Ausführungsform der Erfindung.

Fig. 2 zeigt eine schematische Ansicht eines Simulationssystems gemäß einer Ausführungsform der Erfindung.

Fig. 3 zeigt ein Flussdiagramm für ein Verfahren zum Berechnen einer dynamischen Szene mit thermischen Schatten gemäß einer Ausführungsform der Erfindung.

Fig. 4 zeigt ein Bild eines Testobjekts, das im sichtbaren Spektrum aufgenommen wurde.

Fig. 5 zeigt ein Infrarotbild des Schattens des Testobjekts aus der Fig. 4.

Fig. 6a und 6b zeigen Diagramme mit Temperaturunterschieden, die mit einem Verfahren gemäß einer Ausführungsform der Erfindung berechnet wurden.

Fig. 7 zeigt ein Diagramm mit einem Temperaturprofil, das mit einem Verfahren gemäß einer Ausführungsform der Erfindung berechnet wurde.

Fig. 8 zeigt ein Diagramm mit einer Abhängigkeit der Gleichgewichtstemperatur vom Schattenfaktor.

Fig. 9 zeigt ein Diagramm mit Gleichgewichtstemperaturen, die mit einem Verfahren gemäß einer Ausführungsform der Erfindung berechnet wurden.

Fig. 10 zeigt ein Diagramm mit einem Vergleich zwischen einem Modell gemäß einer Ausführungsform der Erfindung und einer numerischen thermischen Simulation.

Fig. 11 zeigt ein Bild eines thermischen Schattens, das mit einem Verfahren gemäß einer Ausführungsform der Erfindung erzeugt wurde.

Fig. 12 zeigt ein weiteres Bild eines thermischen Schattens, das mit einem Verfahren gemäß einer Ausführungsform der Erfindung erzeugt wurde.

Fig. 13 zeigt den Unterschied zwischen der Schattentemperatur und der Bestrahlungstemperatur für gemessene Daten, für eine numerische Simulation und für ein Verfahren gemäß einer Ausführungsform der Erfindung.

Grundsätzlich sind identische oder ähnliche Teile mit den gleichen Bezugszeichen versehen.

DETAILLIERTE BESCHREIBUNG VON AUSFÜHRUNGSBEISPIELEN

Testsystem, Simulationssystem und Simulationsverfahren

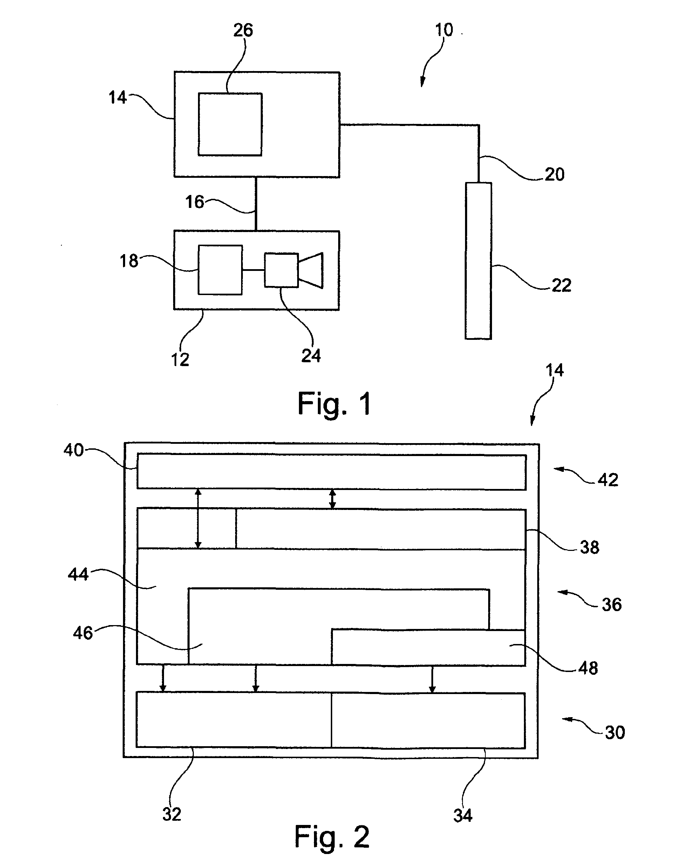

Die Fig. 1 zeigt schematisch den Aufbau eines Testsystems 10, das zum Testen einer Suchvorrichtung 12 ausgeführt ist. Die Suchvorrichtung kann beispielsweise der Suchkopf 12 eines Flugkörpers, beispielsweise einer Rakete, sein.

Das Testsystem 10 umfasst einen Simulationsrechner 14 bzw. ein Simulationssystem 14, das dazu ausgeführt ist, Steuerdaten 16 aus einer Steuerung 18 der Suchvorrichtung 12 auszulesen und Infrarotbilddaten 20 an eine Infrarotanzeige 22, wie etwa einen Infrarotprojektor 22, zu senden. Die Infrarotanzeige 22 erzeugt aus den Infrarotbilddaten 20 ein Bild, das einem Infrarotdetektor 24, beispielsweise einer Kamera 24, der Suchvorrichtung 12 präsentiert werden, die diese verarbeitet, der Steuerung 18 zuführt, die dann beispielsweise aus den verarbeiteten Daten des Infrarotdetektors 24 Steuerdaten 16 erzeugt, die dann die Erzeugung der dynamischen Szene im Simulationssystem 14 beeinflussen können.

Vom Simulationssystem 14 wird dabei eine Software 26 verarbeitet, die aus einer im Simulationssystem 14 gespeicherten, dreidimensionalen Szene eine zweidimensionale Ansicht der Szene erzeugt, die als Infrarotbilddaten 20 an die Infrarotanzeige 22 übertragen werden.

Die beschriebenen Algorithmen und Verfahren können beispielsweise in der von MBDA Deutschland entwik-

kelten Software-Infrastruktur EMIT umgesetzt werden. EMIT kann dazu verwendet werden, die Eigenschaften von Flugkörpern, beispielsweise einer Rakete, auszuwerten, die eine Infrarot-Suchvorrichtung 12 besitzen. Beispielsweise können die von der EMIT-Software 26 erzeugten Bilddaten 29 auf einen Infrarotprojektor 22 übertragen und von diesem angezeigt werden. Die auf dem Infrarotprojektor 22 erzeugten Bilder können dann von der Infrarot-Suchvorrichtung 12 des Flugkörpers aufgenommen werden, und es kann überprüft werden, ob die Suchvorrichtung 12 des Flugkörpers in der gewünschten Art und Weise abläuft. Auch ist es möglich, die von der Software erzeugten Infrarotbilder direkt in die Elektronik 18 der Suchvorrichtung 12 einzuspeisen.

Das Simulationssystem 14 erzeugt dabei eine Simulation, bei der sich die Hardware 18, 24 in einer Regelschleife befindet. Solche Simulationen weisen hohe Anforderungen an die Bilderzeugung auf. Weiter müssen in der Regel Bildfolgen mit hohen Bildfrequenzen erzeugt werden, die mit der Hardware 18, 24 synchronisieren. Das Erzeugen der Bildfolgen sollte für eine Vielzahl von verschiedenen synthetischen Szenarien möglich sein.

Die Fig. 2 zeigt das Simulationssystem 14, das beispielsweise einen herkömmlichen PC umfassen kann, detaillierter. In der Hardwareschicht befinden sich eine CPU 32 und eine GPU 34, die in der Regel auf einer Grafikkarte angeordnet ist. Weiter umfasst das System 14 eine API-Schicht 36, die eine Programmierschnittstelle 38 zwischen einer Anwendung 40 auf der Anwendungsschicht 42 und der Hardwareschicht 30 bereitstellt.

Zum Generieren von Infrarotbildern 20 in Echtzeit sind verschiedene Eigenschaften der Hardware 32, 34 und insbesondere der Grafikkarte von Vorteil: 32-Bit-Gleitzahl-Berechnungsgenauigkeit, eine programmierbare Grafikkarte, insbesondere mit einem Shader, eine "render to texture"-Funktionalität der Grafikkarte, eine hohe Rechenleistung, ein großer Texturspeicher sowie die Synchronisation der Bilderzeugung, der Infrarotanzeige 22 und der zu testenden Suchvorrichtung 12.

Die API-Schicht 26 kann beispielsweise eine Plattform-unabhängige C++-Software-Bibliothek (EMIT-Core) 44 der EMIT-Software 26 umfassen, die weiter verschiedene Anwendungen 40 in der Anwendungsschicht 42, die auf dieser Bibliothek 44 basieren, umfassen kann.

Der EMIT-Core 44 basiert auf den 3D Standardbibliotheken "Open Scene Graph" 46 und "Open GL-GLSL" 48. Dreidimensionale Szenen, die für eine Echtzeit-Berechnung verwendet werden können, müssen in der Regel in eine sogenannte "Scene graph"-Struktur organisiert werden, d. h. die Objekte einer Szene werden hierarchisch sortiert und organisiert. Hierzu kann die Bibliothek "Open Scene Graph" 46 verwendet werden, die dazu ausgeführt ist, derartige Szenegraphen zu verarbeiten und die auch in der Flug- und Verteidigungsindustrie weit verbreitet ist. "Open Scene Graph" 46 ist eine Open-Source-Software, d.h. quelloffene Software, so dass Änderungen und Erweiterungen, die sich mit den hierin beschriebenen Aspekten, die thermische Schatten betreffen, befassen, leicht umgesetzt werden können.

Die Bibliothek 44 in der API-Schicht 36 von EMIT 26 ist in einer Plattformunabhängigen Iso-C++-Umgebung implementiert und deckt Module für Datenmanagement, Bilderzeugung und Bildverarbeitung ab. Im Moment werden Windows- und Linux-Betriebssysteme unterstützt. Die Bibliothek 36 kann in eine Simulation integriert werden, indem die C++-Schnittstellen des EMIT-Cores 44, d. h. der API-Layer, direkt angesprochen werden. Weiter kann eine Programmierschnittstelle 38 mit C- und C++-Anbindungen 40 vorgesehen sein, die über Netzwerk angesprochen werden kann, so dass die Funktionen der API-Schicht 36 von einer Vielzahl von Simulationssoftware-Systemen, wie etwa MATLAB-Simulink, angesprochen werden können.

Durch eine offene Architektur und die Verwendung von Standarddateiformaten ist es möglich, Messdaten oder Daten, die durch externe Programme erzeugt wurden, in eine EMIT-basierte Simulation einzuspeisen. Im Folgenden wird eine Erweiterung von EMIT dargestellt, die dazu ausgeführt ist, thermische Schatten für eine Echtzeitsimulation zu berechnen.

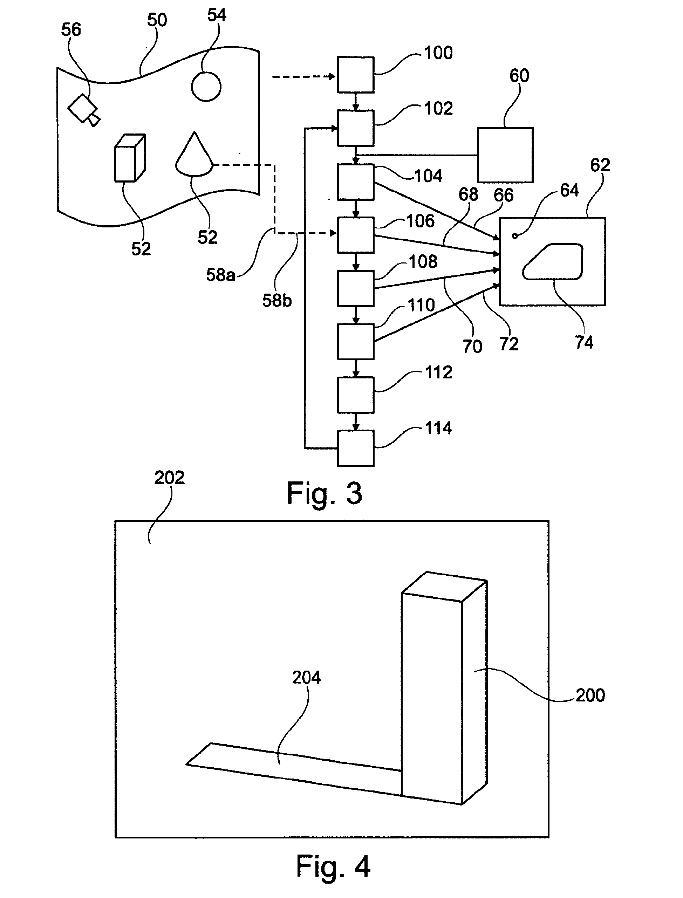

Fig. 3 zeigt ein Flussdiagramm für ein Verfahren zum Berechnen thermischer Schatten, das von dem Simulationssystem 14 ausgeführt werden kann.

Das Verfahren berechnet für einen gegebenen Simulationszeitraum die thermischen Schatten für jeden Bildpunkt in einer Szene 50.

Als Parameter dient die mit einer eindimensionalen thermischen Simulation vorberechnete Bestrahlungstemperatur 58a und Schattentemperatur 58b einer Oberfläche. Für die Berechnung dieser Temperaturen 58a, 58b kann in der zugehörigen thermischen Simulation, mit der die Temperaturen 58a, 58b bestimmt wurden, jeweils ein Wirkungsgrad von 0 % bzw. 100 % angenommen werden, da ein eindimensionales thermisches Modell keinerlei dreidimensionale Geometrieinformationen besitzt.

Das Ziel des Verfahrens besteht nun darin, aus den eindimensionalen Temperaturen 58a, 58b die Temperaturveränderungen für die dreidimensionale Szene 50 abzuleiten. Der Simulationszeitraum wird für die Berechnung in Zeitschritte eingeteilt und für jeden Zeitschritt die folgenden Verfahrensschritte wiederholt.

Falls dies noch nicht geschehen ist, oder falls sich die Szene 50 verändert hat, kann in einem Schritt 100 die Szene 50, die eine Anzahl von Objekten 52 umfassen kann, die mittels Polygonzügen (Meshes) und eventuell Texturen (Grafiken für die Oberfläche der Objekte) definiert sind, in den Speicher der Grafikkarte geladen werden. Den Objekten 52 bzw. deren Oberflächen können auch verschiedene Materialtypen zugeordnet sein, über die die Bestrahlungstemperatur 58a und die Schattentemperatur 58b des jeweiligen Materialtyps bestimmt sind.

Im Schritt 100 kann auch die Position der Lichtquelle 54, beispielsweise der Sonne, und die Position der Kamera 56 und deren Blickrichtung vorgegeben bzw. verändert werden.

Im Schritt 100 werden nun für den aktuellen Simulationsschritt, ausgehend vom aktuellen Simulationszeitpunkt, eine Mehrzahl von Iterationszeitpurikten in der Vergangenheit bestimmt. Diese Iterationszeitpunkte werden dann in den folgenden Iterationsschritten 102 bis 110 bearbeitet.

Das Verfahren umfasst zwei geschachtelte Schleifen. Die äußere Schleife umfasst die Schritte 100 bis 114, die für jeden Simulationsschritt wiederholt werden, und deren Ergebnis eine zweidimensionale thermische Ansicht 62 der Szene 50 ist. Aus den für jeden Simulationsschritt erzeugten Ansichten 62 kann dann eine dynamische zweidimensionale Ansicht (d.h. beispielsweise ein Infratrotfilm) der Szene 50 erzeugt werden. Insbesondere ist somit jedem Simulationsschritt ein Simulationszeitpunkt zugeordnet.

Die innere Schleife umfasst die Schritte 102 bis 110, die für die in jedem Simulationsschritt bestimmten Iterationsschritte wiederholt werden, und in denen die thermischen Schatten zum Iterationszeitpunkt des jeweiligen Iterationsschritts berechnet werden, aus denen dann eine Temperaturentwicklung bis zum Simulationszeitpunkt hin abgeleitet werden kann. Insbesondere ist somit jedem Iterationsschritt ein Iterationszeitpunkt zugeordnet. Es ist zu verstehen, dass die Iterationszeitpunkte für einen Simulationsschritt weit vor dem Simulationszeitpunkt des Simulationsschritts liegen können und auch weit vor den Simulationszeitpunkten der vorhergehenden Simulationsschritte liegen können.

Beispielsweise können n+1 Iterationsschritte bestimmt werden. Zur Generierung der zweidimensionalen Ansicht 62 zu einem bestimmten Simulationszeitpunkt $t_0$ werden die (n+1) Schattentexturen 60 des aktuellen Zeitpunkts $t_0$ (der als letzter Iterationszeitpunkt aufgefasst werden kann) und der vergangenen Iterationszeitpunkte $t_1$, ... , $t_n$ verwendet. Für jedes zweidimensionale Ansicht 62 zu einem späteren Simulationszeitpunkt müssen die (n+1) Schattentexturen in der Regel wieder neu erzeugt werden, da sich die Kamera oder Objekte in der Szene 50 bewegt haben können.

Die Performance, d. h. die Geschwindigkeit der inneren Schleife, ist durch die Anzahl der Iterationsschritte begrenzt. Da Beschattungsereignisse werden in der Regel weniger wichtig werden, je weiter man in der Zeit zurückgeht. Um die Performance zu erhöhen, können die Iterationszeitpunkte auf logarithmische Weise angeordnet werden. Beispielsweise kann eine Ziel-Zeitschrittweite (beispielsweise für den ersten Iterationsschritt, der am weitesten in der Vergangenheit liegt) definiert werden und mit fortschreitender Zeit, d.h. für die darauf folgenden Iterationsschritte, vermindert werden.

Auf diese Weise kann auch die Anzahl der Iterationsschritte vermindert werden, was jedoch auch zu einer verminderten Bildqualität führen kann. Auch kann es bei großen Iterationsschritten möglich sein, dass die Abstände der Schatten zwischen zwei aufeinanderfolgenden Zeitschritten sichtbar hervortreten. Dies kann bis zu einem gewissen Grad durch Emulieren einer lateralen Wärmeleitung versteckt bzw. verdeckt werden.

Die folgenden Schritte 102 bis 110 werden nun für die im Schritt 100 bestimmten Iterationsschritte wiederholt.

Im Schritt 102 werden die "Shadow Map" bzw. Schattentextur 60 für die im Schritt 100 aufgebaute Szene 50 und für die festgelegte Position der Lichtquelle 54 für den Iterationszeitpunkt des jeweiligen Iterationsschritts berechnet. Dazu können in diesem Schritt Computergrafik-Algorithmen für die Schattenberechnung eingesetzt werden, die bereits in die Funktionalität der Grafikkarte integriert sind.

Beispielsweise können weiche Schatten mittels Verwendung von "percentage closer soft shadows" erzeugt werden. Da thermische Schatten verwaschen sein können, kann dabei eine materialspezifische, minimale Halbschattengröße definiert werden. Dieser einstellbare Parameter kann die laterale Wärmeleitung emulieren.

Im Schritt 104 wird begonnen, eine zweidimensionale Ansicht 62 der Szene 50 aus Sicht des Betrachters, d. h. der eingestellten Kameraposition, zum jeweiligen Iterationszeitpunkt zu berechnen.

Im Schritt 104 wird ein Schattenfaktor 66 für jeden Punkt 64 der zweidimensionalen Ansicht 62 basierend auf der Schattentextur 60 zum jeweiligen Iterationszeitpunkt bestimmt. Auch der Algorithmus, mit dem der Schattenfaktor 66 berechnet wird, kann bereits in die Funktionalität der Grafikkarte vordefiniert sein. Beispielsweise können zur Berechnung des Schattenfaktors 66 weiche Schatten mit variabler Halbschattenbreite berechnet werden, wie z. B. mit einem "percentage close soft shadows"-Algorithmus. Der Schattenfaktor 66 kann dabei eine Zahl zwischen 0 und 1 sein, wobei 0 totaler Schatten, ein Wert dazwischen Halbschatten, und 1 vollständige Ausleuchtung bzw. vollständige Sonnenbestrahlung bedeuten kann.

Da die Schatten sich normalerweise zwischen zwei aufeinanderfolgenden Zeitschritten nur wenig unterscheiden, ist es möglich, den Schattenfaktor der vorhergehenden Berechnung für viele Pixel wiederzuverwenden.

In einem Schritt 106 wird nun eine Gleichgewichtstemperatur 68 für den jeweiligen Iterationszeitpunkt basierend auf dem Schattenfaktor 66 ermittelt, indem zwischen der Bestrahlungstemperatur 58a und der Schattentemperatur 58b mit Hilfe des Schattenfaktors 66 interpoliert wird. Auf diese Weise kann jedem Pixel 64 der zweidimensionalen Ansicht 62 der Szene eine Gleichgewichtstemperatur 68 zugeordnet werden.

Die Gleichgewichtstemperatur 68 wird durch eine lineare Interpolation zwischen der Bestrahlungstemperatur 58a und der Schattentemperatur 58b bestimmt.

$$T_{eq} = fT_s + (1 - f)T_{sh} \qquad\qquad (1)$$

Dabei ist $T_s$ die Sonnen- bzw. Bestrahlungstemperatur 58a, $T_{sh}$ die Schattentemperatur 58b und f der Schattenfaktor 66. Die Bestrahlungstemperatur 58a und die Schattentemperatur 58b können dabei von den Materialwerten bzw. Materialtypen abhängig sein, die für den Pixel 64 vorgesehen sind, und können zusätzlich von den Wetterbedingungen abhängig sein, die für die Szene 50 bzw. den aktuellen Zeitschritt vorgegeben sind.

In einem Schritt 108 wird nun eine Veränderung 70 der Oberflächentemperatur bzw. eine Temperaturanpassung 70 durch eine Kombination einer kurz- und langzeitigen Approximationsfunktion bestimmt. Die Temperaturanpassung 70 wird für jedes Pixel 64 der zweidimensionalen Ansicht 62 der Szene 50 berechnet. In diese Berechnung gehen die Gleichgewichtstemperaturen zu vorhergehenden Iterationszeitpunkten ein.

Die beiden Approximationsfunktionen können Exponentialfunktionen bzw. deren Näherungen sein. Dabei kann die erste Exponentialfunktion eine kurzzeitige Temperaturveränderung der entsprechenden Oberfläche annähern und eine zweite Exponentialfunktion die langfristige Temperaturveränderung der Oberfläche annähern. Durch die Aufteilung in zwei Approximationsfunktionen kann die physikalische Temperaturveränderung sehr genau angenähert werden.

Die beiden Exponentialfunktionen (siehe auch die Formel (23) weiter unten) werden in erster Näherung (d.h. mit den ersten beiden Termen der Taylorreihe) separat voneinander berechnet:

$$\Delta T_{1,j} = \Delta T_{1,j-1}(1 - \alpha_1 \Delta t) + \Delta T_{eq}\beta_1 \qquad\qquad (2)$$

$$\Delta T_{2,j} = \Delta T_{2,j-1}(1 - \alpha_2 \Delta t) + \Delta T_{eq}\beta_2 \qquad\qquad (3)$$

$\Delta T_{eq}$ ist dabei die Änderung der Gleichgewichtstemperatur 68 seit der letzten Berechnung, $\beta_i$ ist ein materialspezifischer Gewichtsfaktor, $\alpha_i$ ist die materialspezifische Zeitkonstante, und $\Delta t$ ist dabei die Länge des Iterationsschritts, d.h. die Differenz zwischen dem jeweiligen Iterationszeitpunkt und dem vorhergehenden Iterationszeitpunkt.

Eine Implementierung kann zwei zusätzliche Speicherpuffer umfassen, die beispielsweise in der GPU vorgesehen sein können, die den Beitrag der Exponentialfunktionen pixelweise speichern. Ein Puffer wird für die Eingabe der vorhergehenden Berechnungen verwendet, und der andere Puffer wird dazu verwendet, die Ergebnisse zu speichern. Die beiden Speicher können nach jeder Berechnung ausgetauscht werden.

Im Schritt 110 wird eine Oberflächentemperatur 72 für den jeweiligen Iterationszeitpunkt durch Addition der Gleichgewichtstemperatur 68 und den Beiträgen der Approximationsfunktionen, d.h. der Temperaturanpassung 70, ermittelt.

Die Oberflächentemperatur 72 kann bestimmt werden als

$$T_j = T_{eq} + \Delta T_{1,j} + \Delta T_{2,j} + \Delta T_{eq} \qquad\qquad (4)$$

Eine Veränderung beispielsweise der Sonneneinstrahlung (die im Verhältnis zum Zeitschritt langsam erfolgen kann) kann mit einem additiven Term $\Delta T_{eq}$ genähert werden. Die Oberflächentemperatur 72 wird für jedes Pixel 64 der zweidimensionalen Ansicht 62 der Szene 50 berechnet. Auf diese Weise kann mit dem Verfahren eine zweidimensionale Ansicht 62 der Szene 50 berechnet werden, die ein Infrarotbild mit thermischen Schatten 74 umfasst.

Die Schritte 102 bis 110 werden so lange wiederholt, bis die Berechnung beim aktuellen Simulationszeitpunkt angekommen ist.

Zusammenfassend wird in der inneren Iterationsschleife in einem ersten Schritt eine Shadow Map 60 für die gegenwärtige Position der thermischen Quelle 54 gerendert. Der Lichtkegel kann in den Betrachterkegel eingepasst werden, um den Alias-Effekt der Schatten zu vermindern. Im zweiten Schritt wird die Szene 50 von der Betrachterposition aus gerendert und ein Schattenfaktor 66 wird beispielsweise mittels PCSS berechnet. Am Ende können die vorhergehenden Ergebnisse aus dem Eingabepuffer ausgelesen, die Gleichgewichtstemperatur 72 berechnet und die Beiträge der zwei Exponentialfunktionen entsprechend angepasst werden. Die benötigten Parameter, wie etwa die gegenwärtigen Bestrahlungstemperaturen 58a und Schattentemperaturen 58b, können als gleichförmiger Shader-Parameter übergeben werden. Im letzten Render-Durchgang kann die Oberflächentemperatur 72 mit Gleichung (4) berechnet werden. In einem Schritt 112 erfolgt die Ausgabe der zweidimensionalen Ansicht 62 der Szene, beispielsweise in einer Textur 20, die an die Infrarotanzeige 22 gesendet werden kann, um die berechnete Szene darzustellen.

In einem optionalen Schritt 114 können Objekte 52 der Szene 50 bewegt werden. Beispielsweise umfasst die Szene 50 ein Fahrzeug, das im Laufe der Zeit die Szene durchqueren kann. Auch ist es möglich, die thermische Quelle 54, beispielsweise die Sonne, zu bewegen, so dass beispielsweise eine realistische Wanderbewegung der Sonne im Laufe des Tages entstehen kann. Auch kann die Kamera 56 bewegt werden, um so beispielsweise den Flug oder die Bewegung eines Flugkörpers bzw. Fahrzeugs durch die Szene 50 zu simulieren.

Die Schritte 100 bis 114 können für jeden Simulationsschritt wiederholt werden, so dass eine Infrarotbildgenerierung bzw. das Generieren eines Infrarotfilms mit bewegten Objekten, der thermische Schatten enthält, in Echtzeit möglich ist.

Das Verfahren bzw. der Algorithmus kann durch die Kombination der Approximationsfunktionen und durch Computergrafik-Algorithmen, die bereits in der Grafikkarte hinterlegt sind und für die die Grafikkarte optimiert ist, in Echtzeitsimulationen eingesetzt werden. Weiter wird eine dynamische Szenengeometrie unterstützt.

Die für das Verfahren verwendeten Formeln und Näherungen werden im Folgenden hergeleitet und plausibel gemacht:

**Einführung in Infrarotschatten**

Schatten sind ein wichtiger Teil des Bilderzeugungsprozesses, da sie Hinweise auf die dreidimensionalen Positionen und die Formen von Objekten 52 in einer Szene 50 geben.

Klassifikation von Schatten

Reflexion ist der dominante physikalische Mechanismus, der der Wahrnehmung im sichtbaren Spektrum unterliegt, da selbstleuchtende Flächen in einer Umgebung bei Temperaturen von meistens unter 300 °K nur selten vorhanden sind. Konsequenterweise werden Schatten im sichtbaren Spektrum fast vollständig durch Verdecken von direkten Strahlen von Lichtquellen oder indirekten Strahlen, die von anderen Oberflächen reflektiert wurden, erzeugt.

Sichtbare Schatten bewegen sich zudem mit Lichtgeschwindigkeit, da sichtbare Schatten als instantan verdeckte Lichtstrahlen angesehen werden können.

Im Infrarotspektrum, insbesondere im LWIR-Bereich (8 bis 12 $\mu$m), ist fast jedes Objekt 52 in einer natürlichen Szene 50 selbstleuchtend. Deshalb sind direkte Infrarotstrahlen von einer Oberfläche zu einem Detektor 24 der dominante Part, und reflektierte Strahlen stellen nur einen kleinen Teil der Strahlung dar. Ein wichtiger Anteil von Schatten im Infrarotspektrum sind thermische Schatten, die durch die Verdeckung von Strahlung in den letzten Stunden stammen, die die Oberfläche abkühlen lässt und damit die Strahlung in der Schattenregion vermindert. Ein weiterer Teil von Schatten im Infrarotspektrum betrifft reflektive Schatten, die durch die Verdeckung von instantan blockierten Infrarotstrahlen stammen.

Da thermische Schatten die Temperatur eines Oberflächenpunkts vermindern, erfordert ihre Simulation eine Berechnung der thermischen Bilanz in vier Dimensionen (d. h. einer dreidimensionalen Geometrie in einer Zeitdimension, die bis zu einige Stunden in die Vergangenheit zurückreicht).

Bedeutung von thermischen Schatten

Als Beispiel für eine typische Szene 50 im Infrarotbereich seien Gebäude genannt, die einen Schatten auf eine Straße werfen, in der sich Personen bewegen. Reflektive thermische Schatten, die von den sich relativ schnell bewegenden Personen stammen, können hierbei kaum wahrgenommen werden, da sie nur einen kleinen Beitrag zur Gesamtstrahlung auf der Straße leisten und einen vernachlässigbaren Beitrag auf die Oberflächentemperatur der Straße ausüben. Im Gegensatz zu den sichtbaren Schatten befinden sich thermische Schatten nicht an den Punkten einer Oberfläche, die instantan von einer thermischen Quelle, beispielsweise der Sonne, verdeckt sind, sondern stellen eine kumulative Schattenhistorie der letzten Stunden dar. Daher sind thermische Schatten im Vergleich zu reflektiven Schatten mehr oder weniger verzögert, und der Übergangsbereich zwischen Licht und Schatten, die sogenannte Penumbra oder der Halbschatten, wird größer.

Infrarotbilder werden nicht nur durch Menschen betrachtet, sondern werden auch durch Bildverarbeitungsalgorithmen verarbeitet, beispielsweise der Suchvorrichtung 12 eines "fire and forget" (Schieße und Vergesse)-Flugkörper-Abschusssystems. Häufig führen solche Bildverarbeitungsalgorithmen eine Kantendetektion während eines Vorverarbeitungsschritts durch. Diese detektierten Kanten werden dann mit jenen abgeglichen, die aus 3D-Modellen von Landmarken oder Zielen bekannt sind. In einer solchen Situation können detektierte Kanten, die durch Schatten verursacht werden, einen Abgleichalgorithmus in eine falsche Richtung führen.

Ein weiterer wichtiger Aspekt thermischer Schatten ist, dass ihre Kanten relativ scharf sein können, wenn der Sichtabstand hoch ist, und mit abnehmendem Sichtabstand weicher werden. Dieses Verhalten hat seine Ursache darin, dass die Halbschattenbreite unabhängig vom Sichtabstand ist.

Wenn detaillierte Merkmale von Schattenkanten in einer simulierten Infrarotbildsequenz bzw. dynamischen Infrarotszene 50 nicht dargestellt werden würden, könnte die Leistungsfähigkeit des Bildverarbeitungsalgorithmus im Verhältnis zu realen Infrarotbildern überschätzt werden. Das Einbeziehen von thermischen Schatten hoher Qualität in erzeugte Infrarotbilder bietet einen hohen Grad von Realismus, um diese Simulationsgenauigkeit zu erhöhen.

**Berechnung von Schatten**

Echtzeitalgorithmen für weiche Schatten im sichtbaren Spektrum

Das Rendern (Berechnen) von weichen Schatten ist eine Funktion, die in vielen Grafikkarten bereits vorgesehen ist.

Beispielsweise ist Shadow Mapping (Schattenabbilden) ein häufig benutzter Algorithmus, um Schatten in Echtzeit während des Rendems zu erzeugen. Dabei wird eine sogenannte Schattentextur ("Shadow Map") verwendet, um den Test auf Verdeckung eines Objekts durch ein anderes Objekt bezüglich der Lichtquelle zu vereinfachen. Eine Szene 50 wird dabei zuerst aus der Sicht der Lichtquelle bzw. einer Quelle 54 der Strahlen gerendert, und Tiefenwerte werden in der Tiefenabbildung ("depth map") abgespeichert. In einem zweiten Render-Durchgang wird die Szene 50 aus der Sicht des Beobachters bzw. aus der Sicht der virtuellen Kamera 56 gerendert, und die Tiefenwerte werden verglichen. Dabei wird ein Pixel 64 als im Schatten 74 befindlich klassifiziert, wenn die Tiefe in der Tiefenabbildung kleiner ist als der Tiefenwert aus der Sicht der virtuellen Kamera 56.

Ein sogenannter "percentage closer filtering" (PCF) (Filtern des prozentual näher Gelegenen) kann das Shadow Mapping erweitern, um weiche Schatten zu erzeugen, indem eine Mehrzahl von Schatten innerhalb eines benutzerdefinierten Filterfensters verglichen werden. Der Beschattungsfaktor wird dann durch Mittelwertbildung des Ergebnisses erzeugt. Um sogenannte "contact-hardening soft shadows", d. h. weiche Schatten, die abhängig von der Entfernung zum Beobachter unterschiedlich stark ausgeprägt sind, mit PCF zu erzeugen, ist der sogenannte "percentage closer soft shadows"-(PCSS)-Algorithmus bekannt. Dazu wird eine Suche nach Verdeckern als ein Vorverarbeitungsschritt eingeführt, in dem die Shadow Map durchsucht wird, um eine durchschnittliche Verdeckertiefe für jeden Bildschirmpixel zu berechnen. Weiter wird eine Halbschattenbreite mit einer Abschätzung basierend auf parallelen Ebenen durchgeführt. Abschließend wird die Halbschattenbreite dazu verwendet, das Filterfenster des PCF zu skalieren.

Berechnung thermischer Schatten

Thermische Schatten können durch Modellieren einer zusätzlichen Geometrie in der Form einer Schürze bzw. Einfassung um Schatten werfende Objekte umgesetzt werden, der optische Eigenschaften zugewiesen werden. Dabei ist jedoch eine Anpassung der Szenengeometrie notwendig, was für Szenen mit dynamischer Geometrie häufig schlecht geeignet ist.

Weiter sind verschiedene kommerzielle Softwareprodukte bekannt, die in der Lage sind, thermische Schatten für die Infrarotbilderzeugung zu berechnen. Beispielsweise berechnet RadTherm eine vollständige thermische Gleichgewichtslösung mit thermischen Schatten für eine dreidimensionale Geometrie und wird häufig als eine Referenzlösung verwendet. Für Echtzeitsimulationen werden die Ergebnisse aus RadTherm oft in Texturen gespeichert und sind daher auf Szenen mit statischer Geometrie eingeschränkt.

**Herleitung des Algorithmus für thermische Schatten**

Im Folgenden wird die Näherung der Formeln (1) bis (4) für die thermischen Gleichgewichtsgleichungen mathematisch und experimentell abgeleitet.

Dazu wurden thermische Schatten mit Hilfe einer Infrarotkamera vermessen und die Ergebnisse mit einer Simulation, die auf einer detaillierten thermischen Gleichgewichtsberechnung beruht, verglichen. Die Näherung wurde dann basierend auf den thermischen Gleichgewichtsgleichungen abgeleitet.

Bildmessungen mit thermischen Schatten

Die Fig. 4 zeigt ein Bild eines Testobjekts 200, das im sichtbaren Spektrum aufgenommen wurde. Das Bild zeigt einen schwarzen Polystyrenblock 200 auf einer Asphaltstraße 202, der einen sichtbaren Schatten 204 wirft. Damit ist das (reale) Objekt der (realen) Szene der schwarze Polystyrenblock 200 und der Empfänger der Strahlen des Schattens 204 die Asphaltstraße 202.

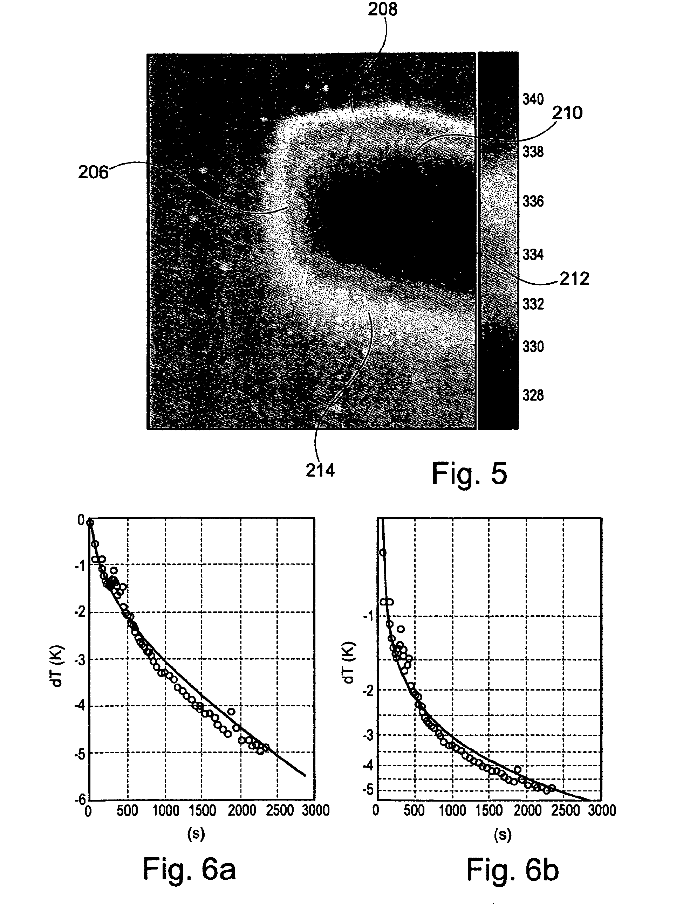

Die Fig. 5 zeigt ein gemessenes Infrarotbild, das mit einer Infrarotkamera im Wellenlängenbereich zwischen 8 bis 12 $\mu$m aufgenommen wurde, und das einen Ausschnitt aus der Figur 5 im Infrarotspektrum zeigt. Auf der rechten Seite des Infrarotbildes ist eine in Kelvin dargestellt.

Die Fig. 5 zeigt detailliert den thermischen Schatten 206, der durch den schwarzen Polystyrenblock 200 verursacht wurde. Im oberen Bereich der Fig. 5 nimmt die Oberflächentemperatur der Asphaltstraße ziemlich schnell ab, was am schmalen Übergangsbereich 208 zwischen hohen und mittleren Temperaturen sichtbar ist. Der Temperaturabfall in diesen Bereichen folgt einer Exponentialfunktion mit einer kleinen Zeitkonstante, da nur die obere Asphaltschicht durch den Schatten gekühlt wird.

Durch das größere thermische Reservoir des dicken, darunterliegenden Betts einer Kiesschicht der Straße 202 ist der Temperaturabfall im Bereich 210 von mittleren Temperaturen zu niedrigen Temperaturen viel langsamer. Der Temperaturabfall folgt einer anderen Exponentialfunktion, die eine längere Zeitkonstante aufweist.

Im unteren Bereich der Fig. 5 ist das Temperaturprofil umgekehrt. Der Bereich 212 von niedriger zu mittlerer Temperatur ist schmal, da die Temperatur in diesem Bereich, der vor kurzem aus dem Schatten getreten ist, schnell exponentiell ansteigt. Der Bereich 213 von mittlerer zu hoher Temperatur ist viel größer, da nun das dicke, darunterliegende Bett der Kiesschicht der Straße 202 aufgeheizt werden muss. Eine quantitative Beschreibung dieses Temperaturprofils wird weiter unten noch detaillierter ausgeführt.

Um den Zustand der abgeschatteten Oberfläche zu beschreiben, kann ein Vergleich seiner Oberflächentemperatur mit der Temperatur einer sonnenbeschienenen Oberfläche durchgeführt werden. Die Oberflächentemperaturverteilung der Fig. 5 variiert wegen der verschiedenen thermischen Eigenschaften der Kiesschicht und der Asphaltschicht, die zusammen die Oberfläche bilden.

Wenn jedoch nur zwei einzelne Pixel des Bildes der Fig. 5 für den Vergleich herangezogen werden, die verschiedene Materialien repräsentieren, kann dies zu irreführenden Ergebnissen führen. Daher sollten für den Vergleich zwei ausgedehnte Flächen verwendet werden, um die Durchschnittstemperaturen des Sonnenlichts und der Kernschattenoberfläche zu bestimmen. Jedoch sind diese Mittelwerttemperaturen immer noch nicht die physikalischen Temperaturen der Oberflächen, da das Bild einen zusätzlichen Beitrag von Infrarotstrahlung enthält, der durch die Reflexion an der Oberfläche selbst entsteht. Dieser Beitrag ist insbesondere für die sonnenbeschienene Oberfläche signifikant und wurde beim Berechnen der Sonneneinstrahlung im Bereich der Kamerawellenlänge in eine Simulationsberechnung einbezogen, die zum Vergleich mit den gemessenen Werten durchgeführt wurde.

Die Fig. 6a und 6b zeigen Diagramme mit gemessenen Temperaturunterschieden und mit der Simulation berechneten Temperaturunterschiede zwischen Schatten und Sonne. Dabei ist in beiden Diagrammen die Zeit in Sekunden nach rechts und die Temperaturdifferenz in Kelvin nach oben aufgetragen. Das linke Diagramm zeigt dabei eine lineare Temperaturachse, das rechte Diagramm eine logarithmische Temperaturachse. Die durchgezogene Linie stellt dabei die Ergebnisse der Berechnungen der Simulation dar, die Kreise die einzelnen Messpunkte der Messung.

Die logarithmische Darstellung des rechten Diagramms zeigt, dass die Funktion für die Beiträge nach langer Zeit (beispielsweise länger als 1000 Sec) durch eine Exponentialfunktion angenähert werden kann. Für die Beiträge mit kürzerer Zeit (beispielsweise kleiner 500 Sec) weicht die Funktion jedoch erheblich von dieser Exponentialfunktion ab.

Für ein thermisches Modell, das die vermessene Oberfläche darstellt, müssen die Schichtmaterialien und ihre Dicke bekannt sein. Im vorliegenden Beispiel der Straße 202 wurde angenommen, dass die obere Asphaltschicht eine Dicke von 5 cm aufweist, sich darunter ein Kiesbett von 20 cm Dicke befindet, und darunter eine Erdschicht von 75 cm angeordnet ist. Die Dicke der Erdschicht ist nicht wichtig, da sie fast keinen Einfluss auf Oberflächentemperatur innerhalb der betrachteten Messzeiträume hat. Das thermische Modell dieser Schichten wurde mittels einer Folge von Schichten aufgebaut, deren Dicke sich mit zunehmender Tiefe verdoppelt, wobei mit einer obersten Schicht begonnen wurde, die 1 mm Dicke aufweist.

Für die Oberflächentemperatur ist das Material der obersten Schicht am wichtigsten. Um dieses Material der obersten Schicht besser zu modellieren, wurde eine Fotografie der Oberfläche der Straße 202 angefertigt. Innerhalb dieser Fotografie befanden sich weiße und schwarze Bereiche, die für eine Abschätzung der Oberflächen-Albedo verwendet wurden. Mit einer geschätzten Albedo von 0,95 und 0,05 für diese Bereiche wurde die Durchschnitts-Albedo der Asphaltoberfläche auf 0,4 geschätzt. Unter Verwendung einer Bildverarbeitungssoftware wurde das Verhältnis von Bitumen zu Kies in diesem Verhältnis auf 15:85 geschätzt.

Basierend auf der Materialdatenbank des Softwareprodukts RadTherm, mit dem die Simulation durchgeführt wurde, und den Ergebnissen der Abschätzung der Albedo für die oberste Schicht wurden die Materialparameter (die Wärmeleitfähigkeit λ, die spezifische Dichte ρ und die spezifische Wärme c) für das thermische Modell wie folgt bestimmt:

|  | λ (W/mK) | ρ (kg/m³) | C (J / kg K) |
|---|---|---|---|
| Asphalt | 2,0 | 2700 | 774 |
| Kies | 2,2 | 2800 | 750 |
| Trockener Boden | 1 | 1500 | 1840 |

Dabei wurde der Emissionsgrad der Asphaltoberfläche als 0,93 angenommen. Die Berechnung der Asphaltoberflächentemperatur wurde mit RadTherm durchgeführt, wobei Wetterdaten von einer nahen Wetterstation hinzugenommen wurden, die in Zeitschritten von 10 min gemessen wurden. Um die Effekte der gewählten Anfangsbedingungen der Oberfläche zu minimieren, wurde die Temperatur für eine Zeitperiode bestimmt, die mehr als 24 Stunden vor Beginn der Oberflächenbeschattung angefangen hat. Wie aus den Fig. 6a und 6b zu erkennen ist, stimmt die berechnete Temperatur mit der gemessenen Temperatur relativ gut überein und bestätigt das verwendete thermische Modell.

Der Algorithmus zur Bestimmung von thermischen Schatten basiert außerdem auf einer besseren Kenntnis des Verhaltens der Oberflächentemperatur. Deshalb wurde auch eine analytische Lösung für dieses Problem bestimmt.

Berechnung des thermischen Gleichgewichts

Das thermische Abschattungsproblem wird nun für eine unendlich ausgedehnte, homogene Schicht mathematisch analysiert. Dies reduziert das Problem auf eine Dimension. Die räumliche Koordinate x wird als x = 0 bei der unteren Grenze der Schicht gewählt, und x = L an deren Oberfläche. Die Oberflächentemperatur T hängt vom Gleichgewicht des Energieflusses ab, der in die Oberflächenschicht eintritt bzw. diese verlässt. Das thermische Verhalten der Schicht kann in Form der folgenden Gleichung beschrieben werden, die auch als Fourier-Differentialgleichung bekannt ist:

$$\frac{dT}{dt} = \kappa \frac{\partial^2 T}{\partial x^2} \qquad (5)$$

Dabei ist $\kappa$ die thermische Leitfähigkeit. Die thermische Leitfähigkeit wird von grundlegenden Materialeigenschaften bestimmt:

$$\kappa \equiv \frac{\lambda}{\rho c} \qquad (6)$$

Dabei ist $\lambda$ die Wärmeleitfähigkeit, $\rho$ die spezifische Dichte der Oberflächenschicht und c die spezifische Wärme der Oberflächenschicht.

Die Lösung der Differentialgleichung kann aus Büchern über Wärmeleitung entnommen werden. Eine Lösung kann auf einen großen Bereich von Bedingungen angewendet werden, indem dimensionslose physikalische Parameter eingeführt werden. Für die dimensionslose Temperatur wird eine Strahlungstemperatur TR eingeführt, die sich über

$$\epsilon\sigma T_R^4 = \alpha S + \epsilon R_L \qquad (7)$$

bestimmt. Dabei ist $\sigma$ die Stefan-Boltzmann-Konstante, $\alpha$ der Absorptionsgrad der Oberfläche, $\epsilon$ der Emissionsgrad der Oberfläche, S der Sonnenstrahlungsfluss (direkt und diffus) und $R_L$ der langwellige Strahlungsfluss der Atmosphäre.

Weitere Beiträge können auf der rechten Seite der Gleichung auftreten, wie etwa ein turbulenter Wärmeaustausch mit der Atmosphäre. Diese Beiträge sind gewöhnlich von geringerer Bedeutung im Vergleich mit denen, die in der Gleichung (7) vorhanden sind, und werden deshalb für die vorliegende Berechnung weggelassen.

Gewöhnlich ist die Oberflächentemperatur T vergleichsweise nahe an der Gleichgewichtstemperatur, und deshalb ist die Differenz $\Delta T \equiv T - T_R$ klein. Somit kann ein Wärmübertragungskoeffizient $\alpha$, der das Strahlungsgleichgewicht betrifft, definiert werden:

$$\alpha = 4\,\epsilon\sigma T_R^3 \qquad (8)$$

Mit diesen Definitionen können weiter die folgenden dimensionslosen Parameter definiert werden:

Temperatur:

$$\theta \equiv \frac{T - T_R}{T_0 - T_R} \qquad (9)$$

Länge:

$$\xi \equiv \frac{x}{L} \tag{10}$$

Fourier-Zahl:

$$F_0 \equiv \frac{\kappa t}{L^2} \tag{11}$$

Biot-Zahl:

$$B_i \equiv \frac{aL}{\lambda} \tag{12}$$

Die Randbedingungen für das Problem können nun wie folgt geschrieben werden:

$$\theta(F_0 = 0, \xi = 1) = 1 \tag{13}$$

$$\left.\frac{\partial \theta}{\partial \xi}\right|_{\xi=0} = 0 \tag{14}$$

$$\left.\frac{\partial \theta}{\partial \xi}\right|_{\xi=1} = -B_i\, \theta(F_0, \xi = 1) \tag{15}$$

Mit den dimensionslosen Variablen und diesen Randbedingungen kann die Lösung als eine Fourier-Reihe angesetzt werden:

$$\theta(F_0, \xi) = \sum_{k=1}^{\infty} C_k \cos(\delta_k \xi) e^{-\delta_k^2 F_0} \tag{16}$$

Die Eigenwerte $\delta_k$ werden durch Lösen der Gleichung bestimmt:

$$\delta \tan(\delta) = b_i \tag{17}$$

Die Koeffizienten $C_k$ können vom anfänglichen Temperaturprofil $\theta(0,\xi)$ bestimmt werden:

$$C_k = \frac{\int_0^1 \theta(0, \xi)\, \cos(\delta_k \xi)\, d\xi}{\int_0^1 \cos^2(\delta_k \xi)\, d\xi} \tag{18}$$

Zusätzlich gilt die folgende Gleichung:

$$\sum_{k=1}^{\infty} C_k \cos(\delta_k) = 1 \qquad (19)$$

Das thermische Verhalten, das durch Gleichung (16) dargestellt wird, kann in zwei Teile aufgeteilt werden. Gleichung (17) zeigt, dass es eine unendliche Anzahl von Eigenwerten gibt. Mit steigendem k konvergiert die Differenz der Eigenwerte schnell auf $\pi$. Nach einer genügend langen Zeitperiode können alle Exponentialfunktionen in Gleichung (16) mit k > 1 vernachlässigt werden, und die Oberflächentemperatur kann durch den ersten Term der Fourier-Serie dargestellt werden:

$$\theta(F_0, 1) = C_1 \cos(\delta_1) e^{-\delta_k^2 F_0} \qquad (20)$$

Das Langzeitverhalten wird daher durch ein Exponentialgesetz dargestellt, was auch durch die Messungen und die numerischen Berechnungen, die in den Fig. 6a und 6b dargestellt sind, bestätigt wird. Die Zeitkonstante der Exponentialfunktion bestimmt sich zu:

$$\tau_i \equiv \frac{L^2}{\delta_1^2(B_i)\kappa} \qquad (21)$$

Die Materialeigenschaften werden durch den Eigenwert $\delta_1$ repräsentiert, der von der Biot-Zahl abhängt. Die Wetterbedingungen werden durch den Wärmeübertragungskoeffizienten berücksichtigt, der in der Biot-Zahl gemäß Gleichung (5) enthalten ist. Die Länge L bestimmt sich durch die Wärmediffusionslänge gemäß

$$L = 2\sqrt{\kappa t} \qquad (22)$$

Für die Wetterbedingungen und die Materialien, die bei der oben genannten Messung zur Anwendung kamen, kann eine Zeitkonstante von 4180 sec bestimmt werden, wenn L = 0,1 m entsprechend einer Messzeit von 300 sec gewählt wird. Dieser Wert der Zeitkonstanten wird für den Langzeit-Exponentialterm für die weiter oben beschriebene Simulation verwendet.

Für Echtzeitsimulationen kann auch das Kurzzeitverhalten mit einem Exponentialgesetz simuliert werden. Die Temperaturverminderungen beim Beginn des Beschattungsvorgangs hängen stark vom Temperaturprofil der oberen Schichten ab. Dies kann von Gleichung (18) abgeleitet werden, die zeigt, dass die Koeffizienten $C_k$ vom Anfangsprofil $\theta(0,\xi)$ abhängen.

Für ein thermisches Modell können daher das Kurzzeit- und das Langzeitverhalten mit Exponentialfunktionen angenähert werden, wobei die beiden Exponentialfunktionen an die numerischen Werte der Simulation angepasst werden. Diese Simulationen berücksichtigen die Wetterhistorie und stellen ein Temperaturprofil der Schichten für jeden Teilzeitschritt bereit.

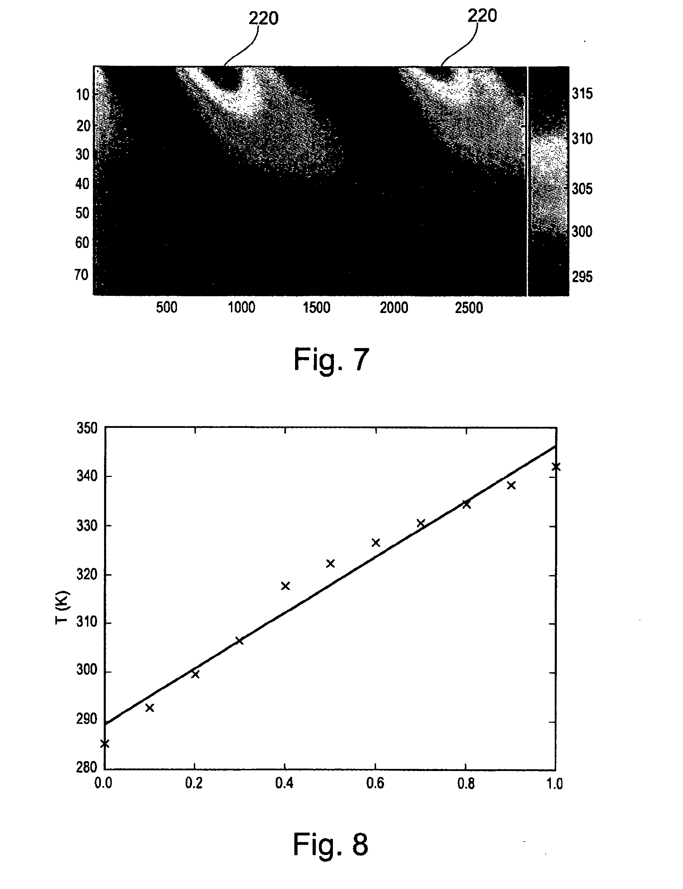

Ein Beispiel für das Ergebnis eines derartigen thermischen Modells ist in Fig. 7 gezeigt, das ein Temperaturprofil der Schichten einer Asphaltstraße 202 für einen zwei Tage dauernden Zeitraum zeigt. Dabei sind nach rechts die Zeitschritte und nach oben die Entfernung zur Oberfläche aufgetragen. Die Bereiche 220 an der Oberfläche bzw. am oberen Ende des Bildes zeigen das Erwärmen der obersten Oberflächenschicht während der Sonneneinstrahlung. Die Figur zeigt auch, wie die Wärme mit der Zeit in tiefere Schichten eindringt.

Die Analyse weiter oben hat auf der Annahme basiert, dass die Strahlungstemperatur $T_R$ und damit die Sonnenstrahlung und langwellige Strahlung zeitlich konstant sind, was im Falle einer realen Situation nicht der Fall sein muss. Die sichtbare Strahlung und die Infrarotstrahlung können sich mit der Zeit im Verlauf eines Tages verändern.

Für den oben beschriebenen Algorithmus zur Berechnung von thermischen Schatten wird daher angenommen, dass diese Veränderungen dadurch berücksichtigt werden können, dass die Gleichgewichtstemperatur mit den Temperaturänderungen in der Strahlungstemperatur verschoben werden kann.

**Umsetzung des Algorithmus**

Die Oberflächentemperatur einer Oberfläche wird nun durch die folgende Formel mit zwei Exponentialfunktionen approximiert, wobei die zuvor abgeleitete thermische Gleichgewichtsgleichung verwendet wird:

$$T(t, \alpha_1, \alpha_2) = T_{eq} + \Delta T_1 e^{-\alpha_1 t} + \Delta T_2 e^{-\alpha_2 t} + \Delta T_{eq} \qquad (23)$$

Dabei ist $T_{eq}$ die Gleichgewichtstemperatur, $\Delta T_i$ der Beitrag der jeweiligen Exponentialfunktion (i = 1, 2) zur Differenz zwischen der Oberflächentemperatur T und der Gleichgewichtstemperatur, $\Delta T_{eq}$ die (langsame) Änderung in der Sonnen- und/oder Schattentemperatur seit der letzten Berechnung, die durch Änderungen der Sonneneinstrahlung (beispielsweise im Verlauf des Tages) erzeugt wird, und $\alpha_i$ sind die materialspezifischen Zeitkonstanten.

Die Formeln (2) und (3) weiter oben ergeben sich aus Gleichung (23). Zur Umsetzung der Näherung (23) auf einer programmierbaren Grafikkarte wurde die Gleichung (23) auf iterative Weise in (2) und (3) umformuliert.

Hinsichtlich der Umsetzung des Algorithmus wurden die Annahmen gemacht, dass die Temperatur linear vom Schattenfaktor 66 abhängt, dass die veränderliche Strahlung der thermischen Quelle und die sich daraus ergebenden Änderungen in der Bestrahlungstemperatur 58a bzw. der Schattentemperatur 58b durch einen additiven Term angenähert werden können und dass die Zeitkonstanten $\alpha_1$, $\alpha_2$ der beiden Exponentialfunktionen, die der Algorithmus verwendet, zeitlich konstant sind.

Die Fig. 8 zeigt die Abhängigkeit der Gleichgewichtstemperatur 68 vom Schattenfaktor 66 für einen Beispiel-Datensatz, der während der Mittagszeit aufgenommen wurde. Die Kreuze betreffen dabei die Ergebnisse einer numerischen Rechnung. Ein Schattenfaktor von 0,0 bedeutet, dass eine Oberfläche vollständig bedeckt ist. In der Fig. 8 ist der Schattenfaktor 66 nach rechts aufgetragen, nach oben ist die Gleichgewichtstemperatur 68 in Kelvin aufgetragen. Aus der Fig. 8 geht hervor, dass eine lineare Abhängigkeit (Linie) der Gleichgewichtstemperatur 68 vom Schattenfaktor 66 eine gute Näherung darstellt.

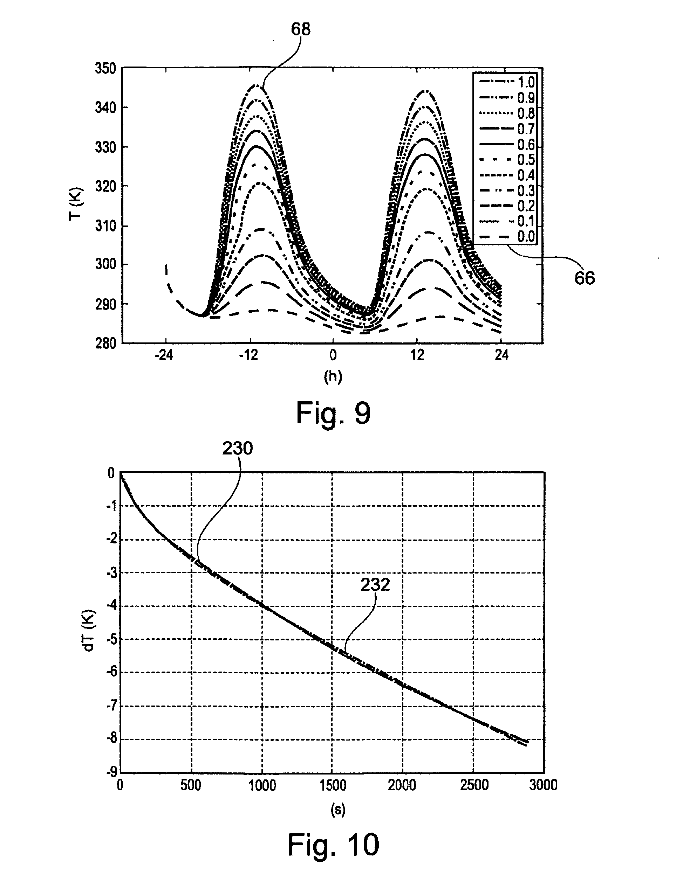

Die Fig. 9 zeigt die Gleichgewichtstemperatur 68 einer numerischen Simulation für verschiedene Schattenfaktoren. Nach rechts ist die Zeit über mehrere Tage aufgetragen, wobei sich bei -12 und 12 die Zeit des höchsten Sonnenstandes, also die Mittagszeit, befindet. Aus der Fig. 9 geht hervor, dass die Gleichgewichtstemperatur 68 während des Tages sich durch die sich verändernde Sonnenstrahlung ändert, dass diese Änderungen aber verhältnismäßig langsam erfolgen. Die Näherung, dass die veränderliche Strahlung der thermischen Quelle und die sich daraus ergebenden Änderungen in der Bestrahlungstemperatur 58a bzw. der Schattentemperatur 58b durch einen additiven Term berücksichtigt werden können, ist insbesondere für langsame Änderungen angemessen.

Wie im Zusammenhang mit der beschriebenen Messung weiter oben zuvor gezeigt wurde, kann die Zeitkonstante $\alpha_2$ für die Langzeit-Exponentialfunktion mit den gegebenen Material- und Wetterbedingungen auf 4180 sec (bzw. deren Kehrwert) gesetzt werden. Die verbleibenden Parameter $\alpha_1$ und $\Delta T_i$ können unter Verwendung einer Näherung der kleinsten Quadrate in Bezug auf die numerischen Simulationsergebnisse angepasst werden.

Die Fig. 10 zeigt das eingepasste Modell 230 und die numerische thermische Simulation 230 in einem Diagramm. In der Fig. 10 sind nach rechts die Zeit und nach oben die Temperaturdifferenz in Kelvin dargestellt. Wie aus der Fig. 10 hervorgeht, stimmen das genäherte bzw. angepasste Modell und die numerische thermische Simulation gut überein.

**Simulationsbeispiele**

Genauigkeit

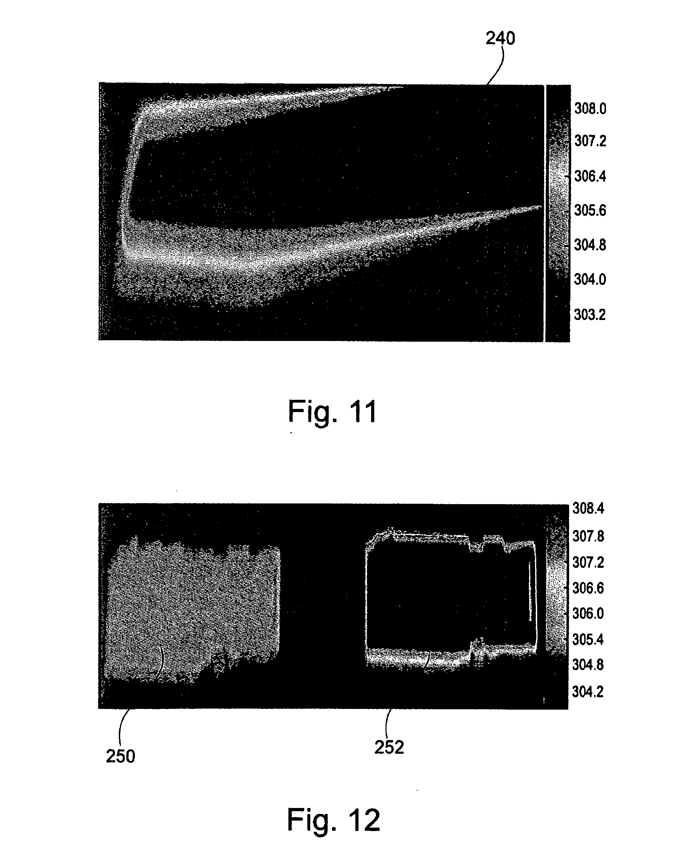

Die Fig. 11 zeigt ein Bild eines thermischen Schattens 240, der durch ein blockförmiges Objekt erzeugt wurde, zu einer Zeit von 40 min nach Entstehen des Schattens. Die schmale Zone des Temperaturgradienten an der vorlaufenden Kante (die Richtung, in die sich der Schatten mit der Zeit bewegt) und die breite Übergangszone an der nachlaufenden Kante sind gut zu erkennen.

Die Fig. 12 zeigt das Ergebnis der Simulation in einer Szene mit einer dynamischen Geometrie. Der thermische Schatten 250 eines Lastwagens 252 ist sichtbar, sogar nachdem der Lastwagen 252 bewegt wurde.

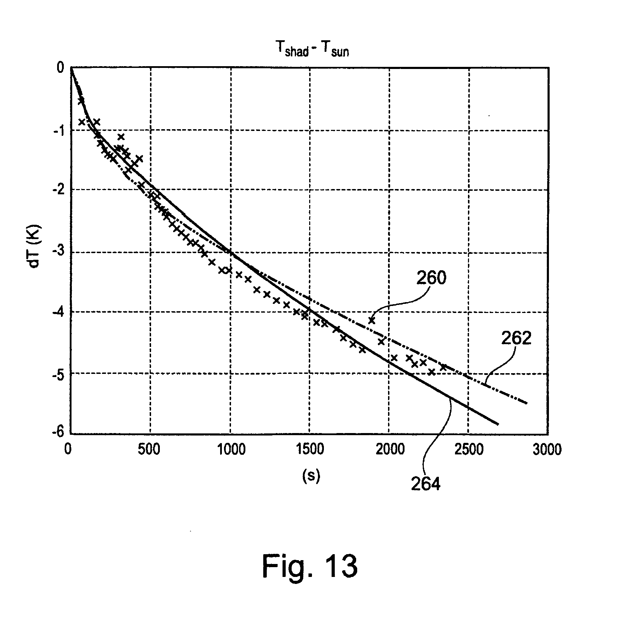

Die Fig. 13 zeigt den Unterschied zwischen Schattentemperatur 58b und Bestrahlungstemperatur 58a für die gemessenen Daten 260, eine numerische Simulation 262 mit RadTherm und der Näherung 264, die mit dem obenstehend beschriebenen Verfahren erzeugt wurde. In der Fig. 13 sind nach rechts die Zeit in Sekunden und nach oben die Temperaturdifferenz in Kelvin aufgetragen.

In der Fig. 13 wird die Temperatur im Kern des Schattens mit den gemessenen Werten und den mit RadTherm bestimmten Werten verglichen. Das simulierte Verhalten der Schattentemperatur stimmt relativ gut mit den gemessenen Daten überein. Die Analyse weiter oben zeigte, dass die grundlegenden Daten, die für die Simulation der thermischen Schatten benötigt werden, auf der Schichtzusammensetzung der Oberfläche, den Materialparametern der Schicht und der Wetterhistorie abhängen. Einige dieser Daten sind bei einer realen Szene nicht bekannt, beispielsweise die Zusammensetzung der Schicht. Deshalb kann die Reproduktion der thermischen Schatten einer realen Szene schwierig zu überprüfen sein, und eine Übereinstimmung kann durch Variation der unbekannten Daten erzeugt werden. Wie aus der Fig. 13 hervorgeht, kann das Verfahren für den Testfall, der hierin beschrieben wurde, jedoch realistische und genaue Ergebnisse liefern, indem die richtigen Eingabedaten basierend auf Messungen und thermischen Gleichgewichtsrechnungen eingegeben wurden.

Geschwindigkeit

Für die Simulationen, deren Ergebnis in den Fig. 11 und 12 gezeigt wird, wurden 8 Samples für die Bedeckungssuche und 25 Poisson-Samples für das PCF-Filter in PCSS benutzt. Die Bildschirmauflösung war 1024 x 768 Pixel, und die Shadow Map hatte eine Größe von 2048 x 2048 Pixel. Die folgende Tabelle zeigt die Performance der Testszenen.

| Szene | Dauer | $\Delta t$ | Iterationen | ms (FPS) |
|---|---|---|---|---|
| Block | 10:12-10:57 | 5 min | 10 | 4,1 (243) |
| Lastwagen | 10:12-10:57 | 5 min | 10 | 3,7 (270) |
| Block | 10:12-10:57 | 2 min | 23 | 9,0 (111) |
| Lastwagen | 10:12-10:57 | 2 min | 23 | 8,2 (121) |

Dabei wurde die Shadow Map in jeder Iteration berechnet. Die Ergebnisse zeigen, dass die Geschwindigkeit durch den Schattentest, der in jeder Iteration durchgeführt wird, begrenzt ist. Die Geschwindigkeit nimmt nahezu linear mit der Anzahl der Iterationsschritte ab. Im Gegensatz zu der Szene mit dem Lastwagen ist die Kamera in der Szene mit dem Block auf einen einzelnen Schatten fokussiert, und damit ist der Schattenbereich auf dem Bildschirm im Vergleich zur Lastwagen-Szene größer. Aus diesem Grund ist die Performance der Lastwagen-Szene besser.

In diesem Beispiel wurde als CPU ein Intel Xeon E5620 CPU mit 2,4 GHz und 8 GB REM, sowie eine NVIDIA G-Force GTX 480 Grafikkarte mit 1536 MB Speicher verwendet.

**Zusammenfassung**

Mit dem beschriebenen Verfahren können thermische Schatten auf einer programmierbaren Grafikkarte simuliert werden. Mit einem Modell der thermischen Gleichgewichtsgleichungen wurden die Kurzzeit- und Langzeitbeiträge mit zwei Exponentialfunktionen angenähert.

Das Testen auf Schatten bzw. das Erzeugen des Schattenfaktors kann mit bekannten Algorithmen zum Berechnen von weichen Schatten erzeugt werden. Weiter kann mit dem Verfahren eine dynamische Geometrie verarbeitet werden und Testszenen in Echtzeit berechnet werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

**1.** Verfahren zum Erzeugen einer Ansicht einer Szene (50) mit thermischen Schatten (74), umfassend:

Berechnen einer Mehrzahl von Schattentexturen (60) für eine dreidimensionale Szene (50) für eine Mehrzahl von Iterationsschritten basierend auf einer Position wenigstens einer thermischen Quelle (54), wobei die dreidimensionale Szene (50) eine Mehrzahl von Objekten (52) umfasst, die jeweils durch eine dreidimensionale Beschreibung einer Objektoberfläche, und/oder eines Objektvolumens definiert sind;
Berechnen eines Schattenfaktors (66) für ein Pixel (64) der zweidimensionalen Ansicht (62) für einen Iterationsschritt basierend auf der Schattentextur (60) des Iterationsschritts, wobei der Schattenfaktor (66) einen Grad der Beschattung an der Stelle des Pixels angibt;

Berechnen einer Gleichgewichtstemperatur (68) für das Pixel (64) für den Iterationsschritt basierend auf dem Schattenfaktor (66) zu dem Iterationsschritt;

Berechnen einer Temperaturanpassung (70) für das Pixel (64) für den Iterationsschritt basierend auf einer Temperaturanpassung aus einem vorhergehenden Iterationsschritt;

Berechnen einer Oberflächentemperatur (72) für den Iterationsschritt für das Pixel (64) basierend auf einer Summe der Gleichgewichtstemperatur (68) und der Temperaturanpassung (70) ;

Erzeugen einer thermischen zweidimensionalen Ansicht (62) der Szene (50) aus den Oberflächentemperaturen des letzten Iterationsschritts.

2. Verfahren nach Anspruch 1, weiter umfassend:

Wiederholtes Berechnen der thermischen zweidimensionalen Ansicht (62) der Szene (50) für weitere Simulationszeitschritte, so dass eine dynamische Szene erzeugt wird.

3. Verfahren nach Anspruch 1 oder 2,
wobei die aktuelle Temperaturanpassung (70) auf Multiplizieren der vorhergehenden Temperaturanpassung mit einem zeitabhängigen Faktor basiert.

4. Verfahren nach Anspruch 3,
wobei der zeitabhängige Faktor die Näherung einer Funktion ist, die den tatsächlichen Verlauf der Temperaturänderung approximiert.

5. Verfahren nach einem der vorhergehenden Ansprüche,
wobei die aktuelle Temperaturanpassung (70) zusätzlich auf einer Änderung der Gleichgewichtstemperatur (68) basiert.

6. Verfahren nach einem der vorhergehenden Ansprüche,
wobei die aktuelle Temperaturanpassung (70) aus der Summe einer ersten Temperaturanpassung und weiteren Temperaturanpassungen gebildet ist, wobei die erste Temperaturanpassung und die weiteren Temperaturanpassungen auf Näherungen für zeitabhängige Funktionen beruhen, die den tatsächlichen Verlauf der Temperaturänderung approximieren.

7. Verfahren nach einem der vorhergehenden Ansprüche,
wobei das Berechnen der Schattentextur (60) und/oder des Schattenfaktors (66) auf einer Parallelrechnerarchitektur mit einem auf die Parallelrechnerarchitektur geladenen oder vorimplementierten Algorithmus ausgeführt werden.

8. Verfahren nach einem der vorhergehenden Ansprüche,
wobei das Berechnen der Gleichgewichtstemperatur (68), der aktuellen Temperaturanpassung (70) und/oder der Oberflächentemperatur (72) auf einer Parallelrechnerarchitektur ausgeführt werden.

9. Verfahren nach einem der vorhergehenden Ansprüche,
wobei die Gleichgewichtstemperatur (68) basierend auf einer Bestrahlungstemperatur (58a) und einer Schattentemperatur (58b) mit Hilfe des Schattenfaktors (66) berechnet wird.

10. Verfahren nach Anspruch 9,
wobei die Gleichgewichtstemperatur (68) durch Interpolation aus der Bestrahlungstemperatur (58a) und der Schattentemperatur (58b) berechnet wird.

11. Verfahren nach Anspruch 9 oder 10,
wobei die Bestrahlungstemperatur (58a) und die Schattentemperatur (58b) in Abhängigkeit eines Materialtyps und/oder eines Materialzustands einer Oberfläche an der Stelle des Pixels (64) gewählt werden.

12. Verfahren nach einem der vorhergehenden Ansprüche, weiter umfassend:

Verändern der dreidimensionalen Szene (50) zwischen zwei Simulationszeitschritten.

13. Computerprogramm, das, wenn es auf wenigstens einem Prozessor (32, 34) ausgeführt wird, den Prozessor dazu anleitet, die Schritte des Verfahrens nach einem der vorhergehenden Ansprüche durchzuführen.

**14.** Computerlesbares Medium, auf dem ein Computerprogramm nach Anspruch 13 gespeichert ist.

**15.** Verfahren zum Testen eines technischen Geräts (12), umfassend die Schritte:

Erzeugen einer Ansicht einer Szene (50) mit thermischen Schatten (74) mit dem Verfahren nach einem der Ansprüche 1 bis 12;
Übertragen von Daten der zweidimensionalen Ansicht (62) der Szene an das technische Gerät;
Erfassen der zweidimensionalen Ansicht (62) der Szene mit einem Detektor (22) des technischen Geräts (12) oder durch einen Menschen.

**16.** Verfahren nach Anspruch 15, weiter umfassend den Schritt:

Erzeugen von Steuerdaten (16) basierend auf der erfassten Ansicht in einer Steuerung (18) des technischen Geräts (12).
Ableiten von Bewegungsdaten aus den Steuerdaten;
Ändern der dynamischen Szene (50) basierend auf den Bewegungsdaten.

**17.** Testsystem (10) zum Testen eines technischen Geräts (12), das Testsystem umfassend:

ein Simulationssystem (14), das dazu ausgeführt ist, das Verfahren nach einem der Ansprüche 1 bis 12 zum Erzeugen einer Ansicht einer Szene (50) mit thermischen Schatten (74) auszuführen;
eine Infrarotanzeige (22);
eine Schnittstelle zum Empfangen von Steuerdaten (16) des technischen Geräts (12).

Fig. 1

Fig. 2

Fig. 3

Fig. 4

Fig. 5

Fig. 6a

Fig. 6b

Fig. 7

Fig. 8

Fig. 9

Fig. 10

240

308.0

307.2

306.4

305.6

304.8

304.0

303.2

# Fig. 11

308.4

307.8

307.2

306.6

306.0

305.4

304.8

304.2

250

252

# Fig. 12

Fig. 13